# EUROPÄISCHE PATENTSCHRIFT

(11) **EP 0 735 815 B1**
(45) Veröffentlichungstag und Bekanntmachung des Hinweises auf die Patenterteilung: **12.08.1998**
(21) Anmeldenummer: 95904467.8
(22) Anmeldetag: 14.12.1994
(51) Int. Cl.: A01N 25/04, A01N 25/30

(54) **ÖL-IN-WASSER-EMULSIONEN**
OIL IN WATER EMULSIONS
EMULSIONS HUILE DANS L'EAU

(30) Priorität: 22.12.1993 DE 4343857
(43) Veröffentlichungstag der Anmeldung: 09.10.1996
(73) Patentinhaber: Clariant GmbH, 65929 Frankfurt am Main (DE)
(72) Erfinder: FRISCH, Gerhard, D-61273 Wehrheim (DE); DAMO, Zoltan, D-65817 Eppstein (DE)
(86) Internationale Anmeldenummer: EP9404142
(87) Internationale Veröffentlichungsnummer: WO9517088

(56) Entgegenhaltungen:
- EP-A- 0 118 759
- EP-A- 0 224 846
- DE-A- 3 624 910

## Beschreibung

Es sind bereits zahlreiche wäßrige Emulsionen von agrochemischen Wirkstoffen bekannt. Derartige Zubereitungen lassen sich z. B. dadurch herstellen, daß man die in Wasser meist unlöslichen Wirkstoffe in einer solchen Menge an organischen Solventien löst und mit einer solchen Menge an Emulgatoren und Zusatzstoffen versetzt, daß sich beim Formulieren mit Wasser auf die Anwendungskonzentrationen ausreichend stabile Emulsionen bilden.

Aus dem Stand der Technik sind Öl-in-Wasser-Emulsionen bekannt, die phosphorylierte Tenside enthalten.

EP-A-0 224 846 beschreibt Pflanzenschutzmittel auf der Basis von wäßrigen Emulsionen, die neben dem Wirkstoff als Dispergiermittel ein in alpha- und omega-Stellung phosphoryliertes Ethylenoxid-Propylenoxid-Ethylenoxid-Block-Copolymerisat oder ein Salz desselben enthalten.
Nachteilig an den beschriebenen Emulsionen ist, daß sie lediglich weitgehend frei von mit Wasser nicht mischbaren organischen Lösungsmitteln sind.

EP-A-0 118 759 offenbart Pflanzenschutzmittel in Form von wäßrigen Emulsionskonzentraten, die eine oder mehrere flüssige oder gelöste Wirkstoffe, Wasser und als öl- und wasserlösliche Dispergiermittel 0,5 bis 20 Gew.-% Salze von phosphorylierten Block-Copolymerisaten auf Basis von Propylenoxid und Ethylenoxid der Formel 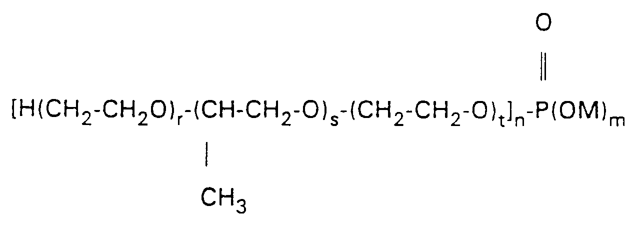 enthalten,
worin
r und s unabhängig voneinander eine Zahl zwischen 20 und 300,
t eine Zahl zwischen 10 und 300,
n und m unabhängig voneinander 1 oder 2, wobei die Summe n + m 3 sein muß, und
M ein Alkalimetallkation, ein Äquivalent eines Erdalkalimetallkations, Ammonium, Alkylammonium oder Alkanolammonium.
   Als geeignete Wirkstoffe werden lediglich hydrolysebeständige Insektizide, Herbizide und Pheromone genannt.

US-A-4 107 302 betrifft wäßrige Insektizidkonzentratmischungen, die einen Wirkstoff aus der Gruppe der Phosphorsäureester und/oder Thiophosphorsäureester und eine oberflächenaktive Verbindung enthalten. Als nichtionische oberflächenaktive Verbindungen werden bevorzugt ethoxylierte Alkylallylphenylether, z. B. Distyrylmethylphenolethoxilat mit 10 EO eingesetzt. Nachteilig an den dort beschriebenen Mischungen ist der zwingende Einsatz einer wäßrigen Pufferlösung zur Einstellung eines pH-Bereiches von 3,0 bis 8,5. Darüber hinaus wird die Zugabe von organischen Lösungsmitteln, wie Ketonen, Ethern und Alkoholen für Mischungen empfohlen, deren Wirkstoffgehalt 30 Gew.- % überschreitet.

EP-A-0 196 463 betrifft phosphorsäureesterhaltige Makroemulsionen, wobei als Tensid zur Wirkstoffdispergierung die wäßrige Lösung eines Nonylphenol-Propylenoxid-Ethylenoxid-Adduktes und/oder die wäßrige Lösung eines Ethylenoxid-Propylenoxid-Ethylenoxid-Blockcopolymeren mit einem mittleren Molekulargewicht zwischen 2000 und 8000 und HLB-Werten zwischen 8 und 30 eingesetzt wird. Die beschriebenen Makroemulsionen enthalten zwingend den Zusatzstoff Glycerin. Bei Einsatz eines Wirkstoffes, der bei Raumtemperatur fest ist, wird eine Lösung des betreffender Stoffes in einem aromatischen Verdünnungsmittel verwendet.

EP-A-0 130 370 betrifft Pflanzenschutzmittelkombinationen, die durch Vermischen einer Wirkstoffdispersion und einer Wirkstofflösung erhalten werden. Die derart hergestellten Pflanzenschutzmittelkombinationen enthalten als phosphorylierte Tenside beispielsweise das Na-Salz von C₁₂-C₁₈-Alkylpolyglykoletherphosphat-mono-/-diester (®Forlanit P, Henkel KGaA) und Triethanolamidsalze eines Gemisches von Phosphorsäure-mono- und -diestern eines Tristyrylphenol-Polyglykolethers mit 18 EO-Einheiten (®Soprophor Fl, Rhône Poulenc) und als sulfatierte und sulfonierte Tensidverbindungen beispielsweise das Na-Salz des Sulfobernsteinsäurehalbesters und Na-Ligninsulfonat. Nachteilig an den dort beschriebenen Pflanzenschutzmittelkombinationen ist der Einsatz von Wirkstofflösungen, die einen hohen Gehalt (40 bis 48 Gew.-%) an organischen Lösungsmitteln, wie Xylol und Methylnaphthalin aufweisen.

Öl-in-Wasser-Emulsionen, die als Dispergiermittel nichtionische Tenside enthalten, sind ebenfalls aus dem Stand der Technik bekannt.

EP-A-0 289 909 beinhaltet wäßrige, stabile Emulsionen von Organo-PhosphorSchädlingsbekämpfungsmitteln, die neben dem Wirkstoff ein nichtionisches Block-, Misch- oder Mischblockcopolymer als Tensid sowie zwingend Harnstoff beinhalten, um eine genügende Phasenstabilisierung zu erreichen.

Der vorliegenden Erfindung lag die Aufgabe zugrunde, Pflanzenschutzformulierungen in Form von wäßrigen Emulsionskonzentraten auf Basis von Wirkstoffen, insbesondere von hydrolyseempfindlichen Wirkstoffen, aus der Gruppe der Phosphorsäureester, Thiophosphorsäureester und/oder Carbamate zu schaffen, die vollständig frei von organischen Lösungsmitteln sind, über eine ausgezeichnete chemische und physikalische Stabilität verfügen, insbesondere gegen Hydrolyse beständig sind und auch bei tiefen Temperaturen (-10°C) stabil sind, sowie allein oder in Mischung mit anderen flüssigen Zubereitungen nach Belieben mit Wasser verdünnbar sind.

Es wurde nun überraschenderweise gefunden, daß der Einsatz bestimmter Tensidverbindungen zu den gewünschten Pflanzenschutzformulierungen führt. Bei diesen Tensidverbindungen handelt es sich im einzelnen um
A) Fettaminethoxylate der Formel I
   und
B) phosphorylierte Fettaminethoxylate der Formel II.

Gegenstand der vorliegenden Erfindung sind Öl-in-Wasser-Emulsionen enthaltend:
0,001 bis 70 Gew.-%, vorzugsweise 0,5 bis 50 Gew.-% mindestens eines Wirkstoffes aus der Gruppe der Phosphorsäureester, Thiophosphorsäureester und/oder Carbamate,
0,001 bis 30 Gew.-%, bevorzugt 0,1 bis 20 Gew.-% einer oder mehrerer Tensidverbindungen aus der Gruppe
   A) ethoxylierte Fettamine der Formel I 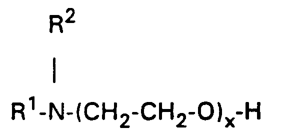 worin
      - R¹: Wasserstoff
      C₁-C₂₄-Alkyl,
      C₂-C₂₄-Alkenyl,
      C₂-C₂₄-Alkinyl,
      C₅-C₂₄-Cycloalkyl,
      C₆-C₃₆-Aryl,
      C₆-C₄₈-Alkaryl,
      C₆-C₃₆-Heteroaryl oder
      C₆-C₄₈-Heteroalkaryl,
      - R²: R¹, ausgenommen Wasserstoff, oder eine Gruppe der Formel (CH₂-CH₂-O)_{y}-H darstellt
      und
      x, y unabhängig voneinander eine Zahl zwischen 1 und 200 bedeuten oder
   B) phosphorlierte Fettaminethoxylate der Formel II 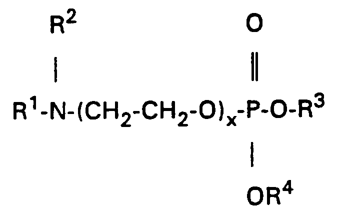 worin
      - R¹: Wasserstoff
      C₁-C₂₄-Alkyl,
      C₂-C₂₄-Alkenyl,
      C₂-C₂₄-Alkinyl,
      C₅-C₂₄-Cycloalkyl,
      C₆-C₃₆-Aryl,
      C₆-C₄₈-Alkaryl,
      C₆-C₃₆-Heteroaryl oder
      C₆-C₄₈-Heteroalkaryl,
      - R²: R¹, ausgenommen Wasserstoff, oder eine Gruppe der Formel 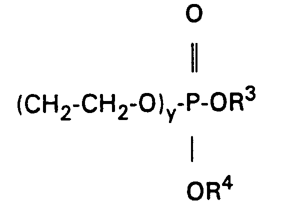 darstellt,
      - R³,R⁴: unabhängig voneinander Wasserstoff,
      ein Alkalimetallkation, ein Äquivalent eines Erdalkalimetallions, Ammonium Mono-, Di- oder Tri(C₁-C₁₂)-alkylammonium oder Mono-, Di- oder Tri-(C₁-C₁₂)-alkanolammonium darstellen
      und
      x, y unabhängig voneinander eine Zahl zwischen 1 und 200 bedeuten sowie gegebenenfalls Zusatzstoffen und
      ad 100 Gew.- % Wasser.

Die erfindungsgemäßen O/W-Emulsionen enthalten mindestens einen agrochemischen Wirkstoff, einen Wirkstoff zur Bekämpfung von Schadorganismen im Haushalt und Hygienebereich und/oder einen pharmakologisch wirksamen Stoff aus der Klasse der Phosphorsäureester, Thiophosphorsäureester und/oder Carbamate. Als Wirkstoffe, bevorzugt hydrolyseempfindliche Wirkstoffe, kommen dabei sowohl solche Substanzen in Frage, die bei Raumtemperatur flüssig sind, als auch solche, die bei Raumtemperatur fest sind. Derartige Wirkstoffe sind bekannt und beispielsweise in "The Pesticide Manual" 9th edition, The British Crop. Protection Council, 1991 beschrieben.

Im vorliegenden Fall versteht man unter agrochemischen Stoffen solche, wie sie üblicherweise im Pflanzenschutz Verwendung finden. Hierunter fallen zum Beispiel Insektizide, Akarizide, Fungizide, Nematizide, Herbizide, Molluskizide, Rodentizide, Wachstumsregulatoren, Safener, Adjuventien, Düngemittel und Algizide.

Als Beispiele für solche Wirkstoffe seien im einzelnen genannt:
O,O-Diethyl-O-[2-isopropyl-4-methylpyrimidyl-(6)]-thiophosphat (Diazinon]
O,O-Diethyl-O-[3,5,6-trichlor-2-pyridyl]thiophosphat (Chlorpyrophos)
2-(1-Methylpropyl)phenylmethylcarbamat (BPMC)
O,O-Dimethyl-S-methylcarbamoylmethyl-thiophosphorsäureester (Dimethoat)
Chlor-bicyclo[3.2.0]hepta-2,6-dien-6-yl-phosphorsäureester (Heptenophos)
O,O-Diethyl-O-1-phenyl-1H-1,2,4-triazol-3-yl-thiophosphorsäureester (Triazophos)
Ethyl-2-diethoxyphosphinthioyloxy-5-methylpyrazolyl[1,5-α]pyrimidin-6-carbonsäureester (Pyrazophos)
O,O-Diethyl-O-(4-nitro-phenyl)-thiono-phosphorsäureester
O,O-Dimethyl-O-(4-nitro-phenyl)-thiono-phosphorsäureester (Fenitrothion)
O-Ethyl-O-(4-methylthio-phenyl)-S-propyl-dithiophosphat
2-Isopropoxy-phenyl-N-methylcarbamat
2,3-Dihydro-2,2-dimethyl-7-benzofuranyl-methyl-carbamat
3,5-Dimethyl-4-methylthiophenyl-N-methyl-carbamat
O,O-Diethyl-O-(3-chlor-4-methyl-7-cumarinyl)-thiophosphat
S-[1,2-Bis-(ethoxycarbonyl)-ethyl]-O,O-dimethyl-dithiophosphorsäureester (Malathion)
O,O-Dimethyl-O-(4-methylmercapto-3-methyl-phenyl)-thionophosphorsäueester (Fenthion, Lebaycid)
O-Ethyl-O-(2-isopropyloxycarbonyl-phenyl)-N-isopropylthionophosphorsäureesteramid.

Unter den Wirkstoffen zur Bekämpfung von Schädlingen im Haushalts- und Hygiene-Bereich sind im vorliegenden Fall alle üblichen in Wasser wenig löslichen Wirkstoffe zu verstehen. Als Beispiele für derartige Wirkstoffe seien im einzelnen genannt:
2-Isopropoxy-phenyl-N-methylcarbamat
O,O-Diethyl-O-(4-nitro-phenyl)-thionophosphorsäureester (Ethyl-Parathion)
O,O-Dimethyl-O-(4-nitro-phenyl)-thionophosphorsäureester (Methyl-Parathion)
S-[1,2-Bis-(ethoxycarbonyl)-ethyl]-O,O-dimethyl-dithiophosphorsäureester
O,O-Dimethyl-O-(3-methyl-4-nitro-phenyl)-thionophosphorsäureester (Sumithion, Folithion)
O,O-Dimethyl-O-(4-methylmercapto-3-methyl-phenyl)-thionophosphorsäureester (Lebaycid, Fenthion).

Unter pharmakologisch wirksamen Stoffen sind im vorliegenden Fall vorzugsweise in veterinärmedizinischen Bereich einsetsbare, in Wasser wenig lösliche Stoffe zu verstehen. Als Beispiel für derartige Wirkstoffe sei genannt: Chlor-bicyclo[3.2.0]hepta-2,6-dien-6-yl-phosphorsäureester (Heptenophos).

Die erfindungsgemäßen Formulierungen enthalten mindestens eine Verbindung der Formel I oder II.

Bei den Verbindungen der Formel I bedeutet R¹ vorzugsweise Wasserstoff, C₁₀-C₁₈-Alkyl, C₂-C₁₈-Alkenyl, C₆-C₂₀-Cycloalkyl, C₆-C₁₈-Aryl, (C₁-C₁₂-Alkyl)₃-Phenyl, insbesondere C₁-C₁₂-Alkyl-Phenyl, Mono-, Di- oder Tristyrylphenyl.

R² bedeutet vorzugsweise C₁₀-C₁₈-Alkyl, C₂-C₁₈-Alkenyl, C₆-C₂₀-Cycloalkyl, C₆-C₁₈-Aryl, (C₁-C₁₂-Alkyl)₃-Phenyl, insbesondere C₁-C₁₂-Phenyl, Mono-, Di- oder Tristyrylphenyl oder eine Gruppe der Formel (CH₂-CH₂-O)_{y}-H, worin y eine Zahl zwischen 1 und 120 ist.

Da die bei der Synthese der Verbindungen der Formel I eingesetzten Amine, insbesondere bei Fettaminen, bei denen R¹ bzw. R² Alkyl- und/oder Alkenylgruppen sind, in der Regel statistische Homologen- und auch Isomerengemische darstellen, ist es zweckmäßig, bei diesen Resten R¹, R² von einer durchschnittlichen Anzahl an C-Atomen zu sprechen.

Die Reste R¹ und R² können, falls ungleich Wasserstoff, geeignete Substituenten tragen, z. B. Halogenatome, Alkoxygruppe, Hydroxygruppe, Nitrogruppe, Aminogruppe und/oder Carboxylestergruppe.

Die Bezeichnung x bzw. y gibt die Molzahl an Ethylenoxideinheiten an. Für x und y ergeben sich bevorzugte Bereiche zwischen 1 und 120, zwischen 1 und 80 und zwischen 1 und 30.

Ganz besonderes geeignete Fettaminethoxylate der Formel I sind Cocosfettamin-, Oleylamin-, Stearylamin- und Talgfettaminethoxylate, worin x eine Zahl zwischen 1 und 40 ist sowie deren entsprechenden Bisethoxylaten, worin x und y unabhängig voneinander eine Zahl zwischen 1 und 40 bedeuten.

Die Tenside der Formel I sind auf einfache Weise herstellbar. Üblicherweise werden diese Verbindungen durch Ethoxylierung der zugrundeliegenden Amine hergestellt (siehe K. Kosswig und H. Stache, "Die Tenside", Hauser-Verlag, S. 157).

Bei den Verbindungen der Formel II bedeutet R¹ vorzugsweise C₁₀-C₁₈-Alkyl, C₂-C₁₈-Alkenyl, C₆-C₂₀-Aryl, C₁-C₁₂-Alkyl-Phenyl, Mono-, Di- oder Tristyrylphenyl.

R² bedeutet vorzugsweise C₁₀-C₁₈-Alkyl, C₂C₁₈-Alkenyl, C₆C₂₀-Aryl, C₁-C₁₂-Phenyl, Mono-, Di-, Tristyrylphenyl oder eine Gruppe der Formel 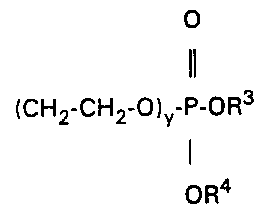 worin y, R³ und R⁴ die nachfolgend genannten bevorzugten Bedeutungen besitzen.

Da die bei der Synthese der Verbindungen der Formel II eingesetzten Amine, insbesondere bei Fettaminen, bei denen R¹ bzw. R² Alkyl- und/oder Alkenylgruppen sind, in der Regel statistische Homologen- und auch Isomerengemische darstellen, ist es zweckmäßig, bei diesen Resten R¹, R² von einer durchschnittlichen Anzahl an C-Atomen zu sprechen.

Die Reste R¹, R² können, falls ungleich Wasserstoff, geeignete Substituenten tragen, z.B. Halogenatome, Alkoxygruppe, Hydroxygruppe, Nitrogruppe, Aminogruppe und/oder Carboxylestergruppe.

Für die Bezeichnungen x und y ergeben sich bevorzugte Bereiche zwischen 1 und 120, zwischen 1 und 80 und zwischen 1 und 30. R³ und R⁴ bedeuten, unabhängig voneinander, bevorzugt Wasserstoff, ein Alkalimetallion, Mono-, Di- oder Tri-(C₂-C₄)-alkylammonium oder Tri-(C₂-C₄)-alkanolammonium.

Die Tenside der Formel II sind auf einfache Weise herstellbar. Üblicherweise erzeugt man diese Verbindungen durch Umsetzung der zugrundeliegenden Aminethoxylate mit Polyphosphorsäure oder Phosphorpentoxid (siehe K. Kosswig, aaO, S. 133).

Die erfindungsgemäßen O/W-Emulsionen enthalten Wasser als kontinuierliche Phase. Im Falle von konzentrierten Emulsionen ist der Wasseranteil relativ gering, während die Emulsionen in verdünntem Zustand größere Mengen an Wasser enthalten. Die Ölphase (= disperse Phase) liegt in Form feinverteilter Tröpfchen in der wäßrigen Phase vor, wobei die Größe der Tröpfchen innerhalb eines bestimmten Bereiches variieren kann. Der Teilchendurchmesser liegt im allgemeinen zwischen 0,001 und 10 µm, vorzugsweise zwischen 0,01 und 5 µm.

Vorteilhafterweise enthalten diese O/W-Emulsionen keine organischen Lösungsmittel. Sie haben daher einen hohen Flammpunkt, sind kaum brennbar und nahezu frei von Geruchsbelästigung.

Als Zusatzstoffe, die in den erfindungsgemäßen Öl-in-Wasser-Emulsionen enthalten sein können, kommen Konservierungsmittel, Kältestabilisatoren, Farbstoffe und Geruchsverbesserungsmittel in Betracht. Als Beispiele für Konservierungsmittel seien 2-Hydroxybiphenyl, Sorbinsäure, p-Hydroxybenzaldehyd, p-Hydroxybenzoesäuremethylester, Benzaldehyd, Benzoesäure, p-Hydroxybenzoesäurepropylester und p-Nitrophenol genannt. Der Gehalt an Konservierungsmittel in der Emulsion kann zwischen 0,01 und 1 Gew.-% liegen.
Als Kältestabilisatoren kommen Glykol, Glycerin, Polyethylenglycol, Zucker und Salze, wie Ammoniumsulfat und Natriumoleat in Betracht, wobei die Emulsionen üblicherweise einen Gehalt von 1 bis 10 Gew.-% aufweisen können. Als Beispiele für Farbstoffe seien Azofarbstoffe und Phthalocyanin-Farbstoffe angeführt. Als Geruchsverbesserungsmittel können Parfümöle eingesetzt werden.

Ein geeignetes Herstellverfahren für diese O/W-Emulsionen wird beispielsweise in EP-B-0 130 370 beschrieben. Prinzipiell jedoch können die beiden Phasen durch Rühren in den gewünschten Zustand gebracht werden.

Die Öl-in-Wasser-Emulsionen zeichnen sich dadurch aus, daß sie unter den in der Praxis herrschenden Bedingungen stabil sind. Bei Langzeit-Lagerungen bleiben diese Emulsionen sowohl bei hohen Temperaturen (50°C) als auch bei tiefen Temperaturen (-5°C, -10°C) hinsichtlich ihrer physikalischen Stabilität und ihres Wirkstoffgehaltes unverändert. Ein weiterer Vorteil besteht darin, daß sich bei Raumtemperatur feste bzw. flüssige Wirkstoffe gleichermaßen gut emulgieren lassen. Der zwingende Zusatz von Glycerin sowie von organischen Lösungsmitteln, insbesondere bei dem Einsatz von festen Wirkstoffen (vgl. EP-A-0 196 463) ist nicht erforderlich.

Die erfindungsgemäßen Öl-in-Wasser-Emulsionen können entweder in der zubereiteten Form oder nach vorheriger Verdünnung appliziert werden. Die Anwendung richtet sich dabei nach der Konzentration der Öl-in-Wasser-Emulsion und nach der jeweiligen Indikation. Die Anwendung der Emulsion erfolgt nach den üblichen Methoden, also zum Beispiel durch Spritzen, Sprühen oder Gießen. Bei der Applikation der erfindungsgemäßen Öl-in-Wasser-Emulsionen wurde eine ausgezeichnete Wirksamkeit gegenüber Schadorganismen, wie Blattläusen, Kornkäfern, Schmierläusen und Bohnenkäfern festgestellt. Dabei ist zu erwähnen, daß eine Phytotoxizität, insbesondere gegenüber Buschbohne, Ackerbohne, Tomate, Gurke, Apfelwildling und Wein nicht nachgewiesen werden konnte.

### Beispiele:

### Pflanzenschutzformulierungen mit Tensid der Formel I:

Tabelle I zeigt erfindungsgemäße Öl-in-Wasser-Emulsionen, die als Tensidverbindung ein bisethoxyliertes Talgfettamin (R¹ = C₁₄ (5%), C₁₆ (30%), C₁₈ (65%), x = 7, y = 8) enthalten.

Die angegebenen Emulsionen sind über einen Zeitraum von mindestens einem Monat lagerstabil (Lagertemperatur: 25°C, 50°C).

**Tabelle I**

| Angaben in Gew.-%, Wasser ad 100 Gew.-% | | | | | | | |
|---|---|---|---|---|---|---|---|
| Beispiel | 1 | 2 | 3 | 4 | 5 | 6 | 7 |
| Tensid | 7,0 | 7,0 | 6,0 | 7,0 | 8,5 | 5 | 7,0 |
| Malathion | 42,0 | 40,0 | 35,0 | 42 | 42 | 30 | 42 |
| Milchsäure | 0,35 | 0,34 | 0,3 | 0,35 | 0,42 | 0,25 | 0,35 |
| Kelzan 2 % in H₂O | 13,3 | 13,3 | 13,3 | 9,4 | 10,0 | 18,0 | 2,0 |

### Pflanzenschutzformulierungen mit Tensid der Formel II:

Tabelle II zeigt erfindungsgemäße Öl-in-Wasser-Emulsionen, die ein phosphoryliertes Fettaminbisethoxylat der Formel II enthalten,
worin
- R¹: C₁₄ (5 %), C₁₆ (30 %), C₁₈ (65 %)
- R²: eine Gruppe der Formel 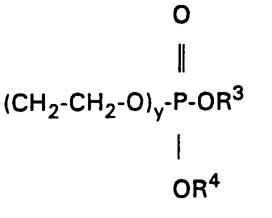
worin
- R³,R⁴: Wasserstoff,
- x: die Zahl 7 ist und
- y: die Zahl 8 ist.

| Angaben in Gew.-%, Wasser ad 100 Gew.-% | | | | | |
|---|---|---|---|---|---|
| Beispiel | 1 | 2 | 3 | 4 | 5 |
| Malathion | 42,0 | 42,0 | 35,0 | 25,0 | 40,0 |
| Tensid 1 | 7,0 | 8,0 | 6,0 | 9,0 | 11,0 |
| Kelzan 2 % in H₂O | 13,3 | 15,0 | 10,8 | 20,0 | 17,0 |
| Triethanolamin | 3,6 | 4,0 | 3,1 | 4,7 | 5,9 |

## Patentansprüche

1. Öl-in-Wasser-Emulsionen, die einen oder mehrere Wirkstoffe und eine oder mehrere Tensidverbindungen enthalten, gekennzeichnet durch einen Gehalt an
0,001 bis 70 Gew.-%, vorzugsweise 0,5 bis 50 Gew.-% mindestens eines Wirkstoffes aus der Gruppe der Phosphorsäureester, Thiophosphorsäureester und/oder Carbamate,
0,001 bis 30 Gew.-%, vorzugsweise 0,1 bis 20 Gew.-% einer oder mehrerer Tensidverbindungen aus der Gruppe
A) ethoxylierter Fettamine der Formel I 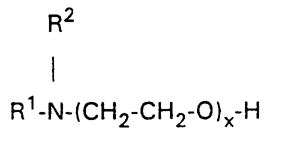 worin
R¹ Wasserstoff
C₁-C₂₄-Alkyl,
C₂-C₂₄-Alkenyl,
C₂-C₂₄-Alkinyl,
C₅-C₂₄-Cycloalkyl,
C₆-C₃₆-Aryl,
C₆-C₄₈-Alkaryl,
C₆-C₃₆-Heteroaryl oder
C₆-C₄₈-Heteroalkaryl,
R² R¹, ausgenommen Wasserstoff, oder eine Gruppe der Formel (CH₂-CH₂-O)_{y}-H darstellt
und
x, y unabhängig voneinander eine Zahl zwischen 1 und 200 bedeutet
oder
B) phosphorlierter Fettaminethoxylate der Formel II 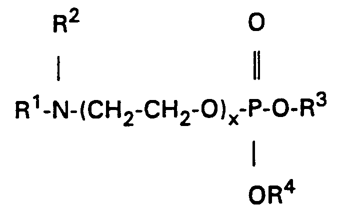 worin
R¹ Wasserstoff
C₁-C₂₄-Alkyl,
C₂-C₂₄-Alkenyl,
C₂-C₂₄-Alkinyl,
C₅-C₂₄-Cycloalkyl,
C₆-C₃₆-Aryl,
C₆-C₄₈-Alkaryl,
C₆-C₃₆-Heteroaryl oder
C₆-C₄₈-Heteroalkaryl,
R² R¹, ausgenommen Wasserstoff, oder eine Gruppe der Formel 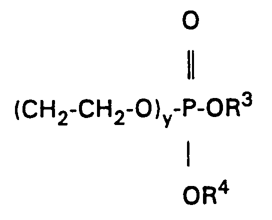 darstellt,
R³,R⁴ unabhängig voneinander Wasserstoff,
ein Alkalimetallkation, ein Äquivalent eines Erdalkalimetallions, Ammonium
Mono-, Di- oder Tri-(C₁-C₁₂)-alkylammonium oder Mono-, Di- oder Tri-(C₁-C₁₂)-alkanolammonium darstellen
und
x, y unabhängig voneinander eine Zahl zwischen 1 und 200 bedeuten sowie gegebenenfalls Zusatzstoffen und
ad 100 Gew.-% Wasser,
mit der Maßgabe, daß die Öl-in-Wasser Emulsionen als Tensidverbindungen keine ethoxylierten und phosphorylierten Styrol-substituierten Phenole oder deren Salze in Kombination mit einem oder mehreren Tensiden der Formel I enthalten.

2. Öl-in-Wasser-Emulsionen nach Anspruch 1, dadurch gekennzeichnet, daß in den Tensidverbindungen der Formel I
R¹ Wasserstoff, C₁₀-C₁₈-Alkyl, C₂-C₁₈-Alkenyl, C₆-C₂₀-Cycloalkyl, C₆-C₁₈-Aryl, (C₁-C₁₂)₃-Phenyl, insbesondere C₁-C₁₂-Phenyl, Mono-, Di- oder Tristyrylphenyl bedeutet.

3. Öl-in-Wasser-Emulsionen nach Anspruch 1 oder 2, dadurch gekennzeichnet, daß
R² C₁-C₁₀-Alkyl, C₂-C₁₈-Alkenyl, C₆-C₂₀-Cycloalkyl, C₆-C₁₈-Aryl, (C₁-C₁₂-Alkyl)₃-Phenyl, insbesondere C₁-C₁₂-Alkyl-Phenyl, Mono-, Di- oder Tristyrylphenyl oder eine Gruppe der Formel (CH₂-CH₂-O)_{y}-H, worin y eine Zahl zwischen 1 und 120 ist.

4. Öl-in-Wasser-Emulsionen nach einem der Ansprüche 1 bis 3, dadurch gekennzeichnet, daß in den Tensidverbindungen der Formel I x, y unabhängig voneinander eine Zahl zwischen 1 und 120, vorzugsweise zwischen 1 und 80, insbesondere zwischen 1 und 30 bedeuten.

5. Öl-in-Wasser-Emulsionen nach Anspruch 1, dadurch gekennzeichnet, daß in den Tensidverbindungen der Formel II
R¹ C₁₀-C₁₈-Alkyl, C₂-C₁₀-Alkenyl, C₆-C₂₀-Aryl, C₁-C₁₂-Alkyl-Phenyl, Mono-, Di- oder Tristyrylphenyl bedeutet.

6. Öl-in-Wasser-Emulsionen nach Anspruch 1 oder 5, dadurch gekennzeichnet, daß in den Tensidverbindungen der Formel II
R² C₁₀-C₁₈-Alkyl, C₂-C₁₈-Alkenyl, C₆-C₂₀-Aryl, C₁-C₁₂-Alkyl-Phenyl, Mono-, Di-, Tristyrylphenyl oder eine Gruppe der Formel 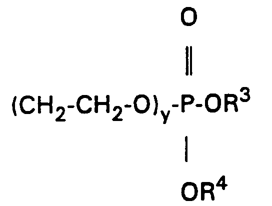 worin R³ und R⁴ unabhängig voneinander Wasserstoff, ein Alkalimetallion, Mono-, Di- oder Tri-(C₂-C₄)-alkylammonium oder Tri-(C₂-C₄)-alkanolammonium bedeuten und y eine Zahl zwischen 1 und 120 ist.

7. Öl-in-Wasser-Emulsionen nach einem der Ansprüche 1, 5 und 6, dadurch gekennzeichnet, daß x, y unabhängig voneinander eine Zahl zwischen 1 und 120, vorzugsweise zwischen 1 und 80, insbesondere zwischen 1 und 30 bedeuten.

8. Öl-in-Wasser-Emulsionen nach einem der Ansprüche 1 bis 7, dadurch gekennzeichnet, daß sie als Zusatzstoffe Konservierungsmittel, Kältestabilisatoren, Farbstoffe und/oder Geruchsverbesserungsmittel enthalten.

9. Öl-in-Wasser-Emulsionen nach einem der Ansprüche 1 bis 8, dadurch gekennzeichnet, daß die Ölphase in Form feinverteilter Tröpfchen in der wäßrigen Phase vorliegt.

10. Öl-in-Wasser-Emulsionen nach einem der Ansprüche 1 bis 9, dadurch gekennzeichnet, daß der Teilchendurchmesser der Tröpfchen zwischen 0,001 bis 10 µm, vorzugsweise zwischen 0,01 bis 5 µm, insbesondere zwischen 0,1 und 2 µm liegt.

11. Verwendung von Öl-in-Wasser-Emulsionen gemäß einem der Ansprüche 1 bis 10 in der Landwirtschaft und im Gartenbau, im Haushalts- und Hygienebereich und/oder im medizinischen Bereich, wobei die Verwendung in Verfahren gemäß Artikel 52(4) EPÜ ausgenommen ist.

## Claims

1. An oil-in-water emulsion which contains one or more active substances and one or more surfactant compounds, and comprises
0.001 to 70% by weight, preferably 0.5 to 50% by weight, of at least one active substance from the group consisting of phosphates, thiophosphates and/or carbamates,
0.001 to 30% by weight, preferably 0.1 to 20% by weight, of one or more surfactant compounds from the group consisting of
A) ethoxylated fatty amines of the formula I 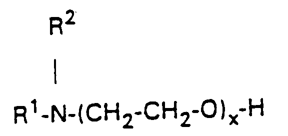 in which
R¹ is hydrogen,
C₁-C₂₄-alkyl,
C₂-C₂₄-alkenyl,
C₂-C₂₄-alkynyl,
C₅-C₂₄-cycloalkyl,
C₆-C₃₆-aryl,
C₆-C₄₈-alkaryl,
C₆-C₃₆-heteroaryl or
C₆-C₄₈-heteroalkaryl,
R² is R¹, with the exception of hydrogen, or is a group of the formula (CH₂-CH₂-O)_{y}-H
and
x and y independently of one another are a number between 1 and 200
or
B) phosphorylated fatty amine ethoxylates of the formula II 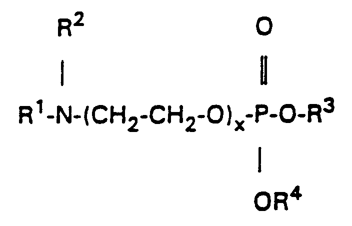 in which
R¹ is hydrogen,
C₁-C₂₄-alkyl,
C₂-C₂₄-alkenyl,
C₂-C₂₄-alkynyl,
C₅-C₂₄-cycloalkyl,
C₆-C₃₆-aryl,
C₆-C₄₈-alkaryl,
C₆-C₃₆-heteroaryl or
C₆-C₄₈-heteroalkaryl,
R² is R¹, with the exception of hydrogen, or a group of the formula 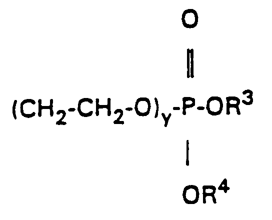
R³ and R⁴ independently of one another are hydrogen, an alkali metal cation, one equivalent of an alkaline earth metal ion, ammonium, mono-, di- or tri(C₁-C₁₂) -alkylammonium or mono-, di- or tri - (C₁-C₁₂) -alkanolammonium,
and
x and y independently of one another are a number between 1 and 200 and, if desired, adjuvants and water to make up 100% by weight,
with the proviso that the oil-in-water emulsion comprises as surfactant compounds no ethoxylated and phosphorylated styrene-substituted phenols or salts thereof in combination with one or more surfactants of the formula I.

2. An oil-in-water emulsion as claimed in claim 1, wherein in the surfactant compounds of the formula I
R¹ is hydrogen, C₁₀-C₁₈-alkyl, C₂-C₁₈-alkenyl, C₆-C₂₀-cycloalkyl, C₆-C₁₈-aryl, (C₁-C₁₂-alkyl)₃-phenyl, especially (C₁-C₁₂-alkyl)-phenyl, mono-, di- or tristyrylphenyl.

3. An oil-in-water emulsion as claimed in claim 1 or 2, wherein
R² is C₁-C₁₀-alkyl, C₂-C₁₈-alkenyl, C₆-C₂₀-cycloalkyl, C₆-C₁₈-aryl, (C₁-C₁₂-alkyl)₃-phenyl, especially C₁-C₁₂-alkyl-phenyl, mono-, di- or tristyrylphenyl or a group of the formula (CH₂-CH₂-O)_{y}-H in which y is a number between 1 and 120.

4. An oil-in-water emulsion as claimed in one of claims 1 to 3, wherein in the surfactant compounds of the formula I x and y independently of one another are a number between 1 and 120, preferably between 1 and 80 and, in particular, between 1 and 30.

5. An oil-in-water emulsion as claimed in claim 1, wherein in the surfactant compounds of the formula II
R¹ is C₁₀-C₁₈-alkyl, C₂-C₁₀-alkenyl, C₆-C₂₀-aryl, C₁-C₁₂-alkyl-phenyl, mono-, di- or tristyrylphenyl.

6. An oil-in-water emulsion as claimed in claim 1 or 5, wherein in the surfactant compounds of the formula II
R² is C₁₀-C₁₈-alkyl, C₂-C₁₈-alkenyl, C₆-C₂₀-aryl, C₁-C₁₂-alkyl-phenyl, mono-, di-, tristyrylphenyl or a group of the formula 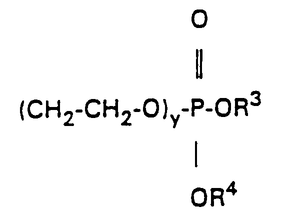 in which R³ and R⁴ independently of one another are hydrogen, an alkali metal ion, mono-, di- or tri- (C₂-C₄) -alkylammonium or tri- (C₂-C₄) - alkanolammonium and y is a number between 1 and 120.

7. An oil-in-water emulsion as claimed in one of claims 1, 5 and 6, wherein x and y independently of one another are a number between 1 and 120, preferably between 1 and 80 and, in particular, between 1 and 30.

8. An oil-in-water emulsion as claimed in one of claims 1 to 7, which comprises as adjuvants preservatives, low temperature stabilizers, dyes and/or odor improvers.

9. An oil-in-water emulsion as claimed in one of claims 1 to 8, wherein the oil phase is present in the form of finely divided droplets in the agueous phase.

10. An oil-in-water emulsion as claimed in one of claims 1 to 9, wherein the particle diameter of the droplets is between 0.001 and 10 µm, preferably between 0.01 and 5 µm and in particular between 0.1 and 2 µm.

11. The use of an oil-in-water emulsion as claimed in one of claims 1 to 10 in agriculture, horticulture, the household or hygiene sector or in medicine, with the exception of its use in methods according to Article 52 (4) EPC.

## Revendications

1. Emulsions huile-dans-eau qui contiennent une ou plusieurs substances actives et un ou plusieurs agents de surface, caractérisées par une teneur
de 0,001 à 70 % en poids, de préférence de 0,5 à 50 % en poids d'au moins un principe actif pris dans le groupe comportant des esters d'acide phosphorique, des esters d'acide thiophosphorique et/ou des carbamates,
de 0,001 à 30 % en poids, de préférence de 0,1 à 20 % en poids d'un ou de plusieurs agents de surface pris dans le groupe comportant
A) des amines grasses oxéthylées de formule I 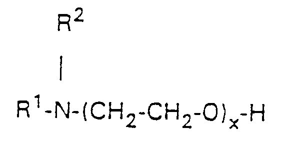 dans laquelle
R¹ représente un atome d'hydrogène,
alkyle en C₁-C₂₄,
alcényle en C₂-C₂₄,
alcynyle en C₂-C₂₄,
cycloalkyle en C₅-C₂₄,
aryle en C₆-C₃₆,
alcaryle en C₆-C₄₈,
hétéroaryle en C₆-C₃₆ ou
hétéroalcaryle en C₆-C₄₈,
R² représente R¹ à l'exeption d'un atome d'hydrogène, ou représente un groupe de formule (CH₂-CH₂-O)_{y}-H
et
x, y, indépendamment l'un de l'autre, représentent un nombre compris entre 1 et 200, ou
B) des oxéthylates d'amines grasses phosphorylées de formule II 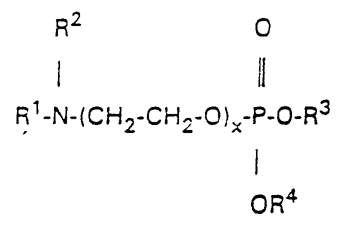 dans laquelle
R¹ représente un atome d'hydrogène,
alkyle en C₁-C₂₄,
alcényle en C₂-C₂₄,
alcynyle en C₂-C₂₄,
cycloalkyle en C₅-C₂₄,
aryle en C₆-C₃₆,
alcaryle en C₆-C₄₈,
hétéroaryle en C₆-C₃₆ ou
hétéroalcaryle en C₆-C₄₈,
R² représente R¹ à l'exeption d'un atome d'hydrogène, ou représente un groupe de formule 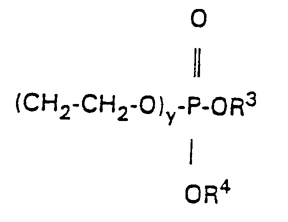
R³ , R⁴ , indépendamment l'un de l'autre, représentent un atome d'hydrogène, un cation de métal alcalin, un équivalent d'un cation de métal alcalino-terreux, un groupe ammonium, mono-, di- ou tri(alkyl en C₁-C₁₂)-ammonium ou mono-, di- ou tri-(alcanol en C₁-C₁₂)-ammonium,
et
x, y, indépendamment l'un de l'autre, représentent un nombre compris entre 1 et 200,
ainsi qu'éventuellement des matières d'addition et une quantité suffisante d'eau jusqu'à 100 % en poids,
à la condition que les émulsions huile-dans-eau ne contiennent pas en tant qu'agent de surface des phénols oxéthylés et phosphorylés substitués par du styrène ou ses sels en combinaison avec un ou plusieurs agents de surface de formule I.

2. Emulsions huile-dans-eau selon la revendication 1, caractérisées en ce que dans les agents de surface de formule I,
R¹ représente un atome d'hydrogène, des groupes alkyle en C₁₀-C₁₈, alcényle en C₂-C₁₈, cycloalkyle en C₆-C₂₀, aryle en C₆-C₁₈, (alxyl en C₁-C₁₂)₃-phényle, en particulier (alkyl en C₁-C₁₂)-phényle, mono-, di- ou tristyrylphényle.

3. Emulsions huile-dans-eau selon la revendication 1 ou 2, caractérisées en ce que
R² représente des groupes alkyle en C₁-C₁₀, alcényle en C₂-C₁₈, cycloalkyle en C₆-C₂₀, aryle en C₆-C₁₈, (alkyl en C₁-C₁₂)₃-phényle, en particulier (alkyl en C₁-C₁₂)-phényle, mono-, di- ou tristyrylphényle ou un groupe de formule (CH₂-CH₂-O)_{y}-H, dans laquelle y est un nombre compris entre 1 et 120.

4. Emulsions huile-dans-eau selon l'une des revendications 1 à 3, caractérisées en ce que dans les agents de surface de formule I, x, y, indépendamment l'un de l'autre, sont un nombre compris entre 1 et 120, de préférence entre 1 et 80, en particulier entre 1 et 30.

5. Emulsions huile-dans-eau selon la revendication 1, caractérisées en ce que dans les agents de surface de formule II
R¹ représente des groupes alkyle en C₁₀-C₁₈, alcényle en C₂-C₁₀, aryle en C₆-C₂₀, (alkyl en C₁-C₁₂) - phényle, mono-, di- ou tristyrylphényle.

6. Emulsions huile-dans-eau selon la revendication 1 ou 5, caractérisées en ce que dans les composés agents de surface de formule II
R² représente des groupes alkyle en C₁₀-C₁₈, alcényle en C₂-C₁₈, aryle en C₆-C₂₀, (alkyl en C₁-C₁₂) -phényle, mono-, di- ou tristyrylphényle ou un groupe de formule 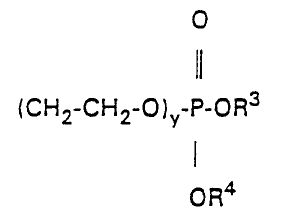 dans laquelle R³ et R⁴, indépendamment l'un de l'autre, représentent un atome d'hydrogène un ion de métal alcalin, mono-, di- ou tri(alkyl en C₂-C₄)-ammonium ou le tri(alcanol en C₂-C₄)-ammonium et y est un nombre compris entre 1 et 120.

7. Emulsions huile-dans-eau selon l'une des revendications 1, 5 et 6, caractérisées en ce que x, y, indépendamment l'un de l'autre, représentent un nombre compris entre 1 et 120, de préférence entre 1 et 80, plus particulièrement entre 1 et 30.

8. Emulsions huile-dans-eau selon l'une des revendications 1 à 7, caractérisées en ce qu'elles contiennent en tant que matières d'addition des agents de conservation, des stabilisants au froid, des colorants et/ou des substances odorantes.

9. Emulsions huile-dans-eau selon l'une des revendications 1 à 8, caractérisées en ce que la phase huileuse est présente sous forme de gouttelettes finement divisées dans la phase aqueuse.

10. Emulsions huile-dans-eau selon l'une des revendications 1 à 9, caractérisées en ce que le diamètre des gouttelettes est compris entre 0,001 et 10 µm, de préférence entre 0,01 à 5 µm, plus particulièrement entre 0,1 et 2 µm.

11. Utilisation des émulsions huile-dans-eau selon l'une des revendications 1 à 10, en agriculture et en horticulture, dans le domaine ménager et de l'hygiène et/ou dans le domaine de la médecine, l'utilisation dans le procédé selon l'article EPO 52 (4) étant exclue.
